# EUROPEAN PATENT APPLICATION

(11) **EP 4 793 244 A1**
(43) Date of publication of application: **19.08.2026**
(21) Application number: 24877042.2
(22) Date of filing: 27.09.2024
(51) Int. Cl.: C03B 5/235

(54) **METHOD FOR PRODUCING GLASS ARTICLE AND GLASS-MELTING FURNACE**

(30) Priority: 13.10.2023 JP 2023177584
(71) Applicant: Nippon Electric Glass Co., Ltd., Otsu-shi, Shiga 520-8639 (JP)
(72) Inventor: ITAZU Hiroyuki, Otsu-shi, Shiga 520-8639 (JP); FUJIWARA Masaki, Otsu-shi, Shiga 520-8639 (JP)
(74) Representative: Tetzner, Michael
(86) International application number: PCT/JP2024/034718
(87) International publication number: WO 2025/079443

(57) **Abstract**

Provided is a manufacturing method for a glass article, including a melting step of heating and melting glass raw materials (Gr) to generate a molten glass (Gm) by using a heating device (4). A burner (6) of the heating device (4) includes: a fuel gas injection port (11aa) that allows injection of a fuel gas (d) containing at least one of a hydrogen gas (a) or a hydrocarbon gas (b); and a combustion-supporting gas injection port (12aa) that allows injection of a combustion-supporting gas (c). When a flow velocity of the fuel gas (d) at the fuel gas injection port (11aa) is represented by V1 [m/s], a flow velocity of the combustion-supporting gas (c) at the combustion-supporting gas injection port (12aa) is represented by V2 [m/s], and a proportion of a generated heat amount [W] from the hydrocarbon gas (b) to a total generated heat amount [W] from the fuel gas (d) is represented by "p" ("p" is from 0 to 1), a flow velocity ratio (V1/V2) satisfies a relationship of: 8-6p≤V1/V2≤24-18p.

## Description

### Technical Field

The present invention relates to a manufacturing method for a glass article and a glass-melting furnace.

### Background Art

A manufacturing process for a glass article includes a melting step of heating and melting glass raw materials in a glass-melting furnace. In the melting step, a method of heating and melting glass raw materials in a glass-melting furnace by using a burner that burns a fuel gas to form a flame has been widely used (for example, Patent Literature 1). As the fuel gas, a hydrocarbon gas such as a natural gas is generally used.

### Citation List

Patent Literature 1: WO 2011/136086 A

### Summary of Invention

### Technical Problem

When the hydrocarbon gas is used as the fuel gas to be supplied to the burner, CO₂ contained in an exhaust gas generated in the melting step increases. As a result, there arises a problem in that an environmental load increases. Thus, in order to reduce CO₂ contained in the exhaust gas, it is required that the amount of use of the hydrocarbon gas be reduced.

Accordingly, it is conceivable to replace part or all of the hydrocarbon gas with a hydrogen gas as the fuel gas to be supplied to the burner. In this manner, CO₂ contained in the exhaust gas can be reduced.

In this case, however, a flame formation area in which a flame is formed with the burner may significantly vary depending on a mixing ratio between the hydrocarbon gas and the hydrogen gas in the fuel gas. When the flame formation area is excessively small, there arises a problem in that the glass raw materials cannot be efficiently heated in the melting step.

The present invention has an object to efficiently heat and melt glass raw materials by forming a flame extending over a wide area with a burner while reducing CO₂ contained in an exhaust gas generated in a melting step.

### Solution to Problem

(1) According to the present invention which has been devised in order to solve the problems described above, there is provided a manufacturing method for a glass article, comprising a melting step of heating and melting glass raw materials to generate a molten glass by using a heating device. The heating device comprises: a burner configured to form a flame; a hydrogen gas supply device configured to supply a hydrogen gas to the burner; a hydrocarbon gas supply device configured to supply a hydrocarbon gas to the burner; and a combustion-supporting gas supply device configured to supply a combustion-supporting gas to the burner. The burner comprises: a fuel gas injection port that allows injection of a fuel gas containing at least one of the hydrogen gas or the hydrocarbon gas; and a combustion-supporting gas injection port that allows injection of the combustion-supporting gas. When a flow velocity of the fuel gas at the fuel gas injection port is represented by V1 [m/s], a flow velocity of the combustion-supporting gas at the combustion-supporting gas injection port is represented by V2 [m/s], and a proportion of a generated heat amount [W] from the hydrocarbon gas to a total generated heat amount [W] from the fuel gas is represented by "p", a flow velocity ratio V1/V2 satisfies a relationship of: 8-6p≤V1/V2≤24-18p.
   In the above-mentioned manner, regardless of whether the fuel gas contains, out of the hydrogen gas and the hydrocarbon gas, only the hydrogen gas, only the hydrocarbon gas, or both the hydrogen gas and the hydrocarbon gas, a reaction between the fuel gas and the combustion-supporting gas can be caused efficiently over a wide area to combust the fuel gas over a wide area. As a result, a flame extending over a wide area can be formed with the burner while CO₂ contained in the exhaust gas generated in the melting step is being reduced.
(2) In the configuration of the above-mentioned item (1), it is preferred that, when a sectional area of the fuel gas injection port is represented by S1, and a sectional area of the combustion-supporting gas injection port is represented by S2, a sectional area ratio S2/S1 be from 4 to 12.
   In the above-mentioned manner, the flow velocity ratio V1/V2 is easily adjustable so as to satisfy the above-mentioned relationship of: 8-6p≤V1/V2≤24-18p.
(3) In the configuration of the above-mentioned item (1) or (2), it is preferred that the fuel gas injection port have a flat shape.
   In the above-mentioned manner, the fuel gas spreads in a planar form. Thus, a flame extending over a wide area can easily be formed with the burner.
(4) In the configuration of any one of the above-mentioned items (1) to (3), it is preferred that the combustion-supporting gas injection port surround the fuel gas injection port.
   In the above-mentioned manner, the combustion-supporting gas injected from the combustion-supporting gas injection port is present around the fuel gas injected from the fuel gas injection port. Thus, the fuel gas and the combustion-supporting gas react with each other over a wide area inside the furnace to combust the fuel gas. As a result, a flame extending over a wide area inside the furnace can easily be formed.
(5) In the configuration of any one of the above-mentioned items (1) to (4), it is preferred that the combustion-supporting gas be an oxygen gas.
   In the above-mentioned manner, in comparison to a case in which air is used as the combustion-supporting gas, the introduction of gases (for example, nitrogen) that do not contribute to combustion into the melting furnace can be reduced to thereby improve thermal efficiency.
(6) In the configuration of any one of the above-mentioned items (1) to (5), it is preferred that the hydrocarbon gas be a natural gas.
   When the natural gas is used as described above, the amount of CO₂ contained in the exhaust gas can easily be reduced in comparison to a case in which a hydrocarbon gas other than the natural gas is used.
(7) According to the present invention which has been devised in order to solve the problems described above, there is provided a glass-melting furnace, which is configured to heat and melt glass raw materials to generate a molten glass by using a heating device. The heating device comprises: a burner configured to form a flame; a hydrogen gas supply device configured to supply a hydrogen gas to the burner; a hydrocarbon gas supply device configured to supply a hydrocarbon gas to the burner; and a combustion-supporting gas supply device configured to supply a combustion-supporting gas to the burner. The burner comprises: a fuel gas injection port that allows injection of a fuel gas containing at least one of the hydrogen gas or the hydrocarbon gas; and a combustion-supporting gas injection port that allows injection of the combustion-supporting gas. When a sectional area of the fuel gas injection port is represented by S1, and a sectional area of the combustion-supporting gas injection port is represented by S2, a sectional area ratio S2/S1 is from 4 to 12.

In the above-mentioned manner, the flow velocity ratio V1/V2 is easily adjustable so as to satisfy the above-mentioned relationship of: 8-6p≤V1/V2≤24-18p. Thus, a flame extending over a wide area can be formed with the burner while reducing CO₂ contained in an exhaust gas.

### Advantageous Effects of Invention

According to the present invention, it is possible to efficiently heat and melt the glass raw materials by forming the flame extending over a wide area with the burner while reducing CO₂ contained in the exhaust gas generated in the melting step.

### Brief Description of Drawings

FIG. 1 is a longitudinal sectional view of a glass-melting furnace according to an embodiment of the present invention.
FIG. 2 is a sectional view taken along the line A-A of FIG. 1.
FIG. 3 is a front view of a furnace inner side of a burner of a heating device according to the embodiment of the present invention.

### Description of Embodiments

Now, a manufacturing method for a glass article and a glass-melting furnace according to an embodiment of the present invention is described with reference to the attached drawings.

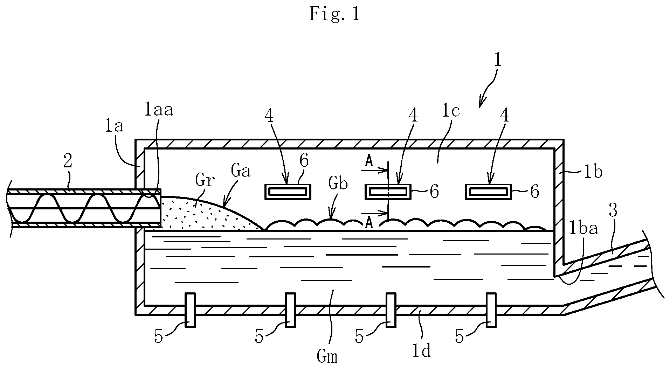

As illustrated in FIG. 1, a manufacturing apparatus for a glass article to be used for the manufacturing method comprises a glass-melting furnace 1. The manufacturing apparatus further comprises, as required, a fining chamber, a homogenization chamber (stirring chamber), and a forming device. In the fining chamber, a fining treatment is performed on a molten glass generated in the glass-melting furnace 1. In the homogenization chamber, the molten glass, which has been subjected to the fining treatment, is stirred. The forming device is configured to form the molten glass, which has been subjected to the stirring treatment, into a glass article.

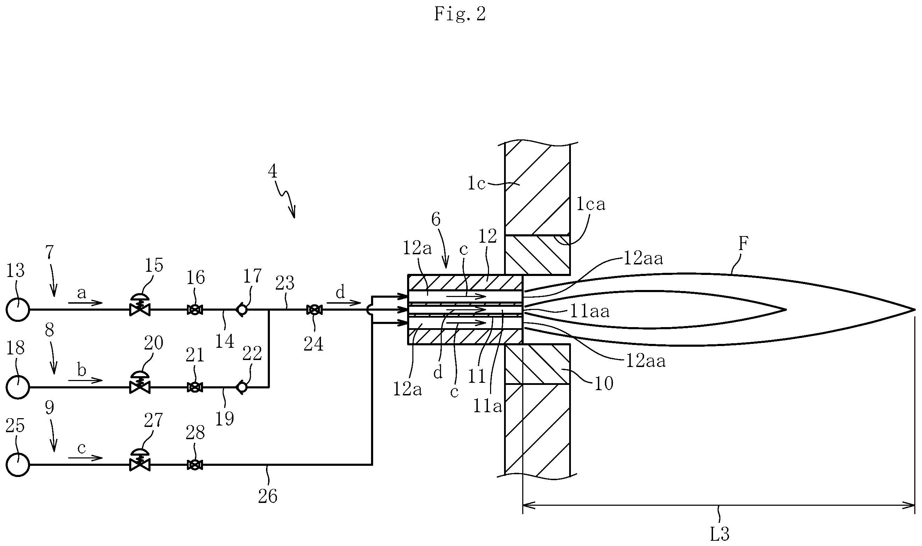

The glass-melting furnace 1 is a space for performing a melting step of obtaining a molten glass Gm. As illustrated in FIG. 1 and FIG. 2, the glass-melting furnace 1 continuously heats and melts glass raw materials Gr to form a molten glass Gm. The glass raw materials Gr may comprise, besides natural raw materials and chemical raw materials, cullet (recycled glass).

A feed port 1aa for feeding the glass raw materials Gr is formed in a front wall 1a of the glass-melting furnace 1. A raw-material feeding device 2 is provided to the feed port 1aa. The raw-material feeding device 2 may be a pusher, a vibrating feeder, or the like, but is a screw feeder in this embodiment. The number or position of arrangement of the raw-material feeding device 2 can be appropriately changed depending on, for example, a size of the glass-melting furnace 1.

An outflow port 1ba for discharging the molten glass Gm is formed in a rear wall 1b of the glass-melting furnace 1. A transfer pipe 3 is connected to the outflow port 1ba, and the molten glass Gm is successively supplied to a downstream side. When glass articles are simultaneously manufactured at a plurality of locations, a plurality of outflow ports 1ba may be formed in the glass-melting furnace 1 so that the molten glass Gm is supplied to the downstream side through the transfer pipes 3 connected to the outflow ports 1ba, respectively.

In the glass-melting furnace 1, a melting space inside the furnace is defined by a wall part formed of a refractory brick. Examples of the refractory brick include a zirconia-based electrocast brick, an alumina-based electrocast brick, an alumina-zirconia-based electrocast brick, an AZS (Al-Zr-Si)-based electrocast brick, and a dense fired brick.

Heating devices 4 are provided to side walls 1c of the glass-melting furnace 1. Each of the heating devices 4 heats the glass raw materials Gr and/or the molten glass Gm with a flame F (see FIG. 2) described later from a position above a liquid surface of the molten glass Gm. The number or positions of arrangement of the heating devices 4 can be appropriately changed depending on, for example, the size of the glass-melting furnace 1. In this embodiment, a case is given as an example in which a plurality of heating devices 4 are provided to each of the side walls 1c on both sides so as to be spaced apart from each other in a direction of flow of the molten glass Gm (direction from the front wall 1a toward the rear wall 1b of the glass-melting furnace 1).

A plurality of rod-shaped electrodes 5 are provided to a bottom wall 1d of the glass-melting furnace 1. The electrodes 5 heat the molten glass Gm through application of a current under a state in which the electrodes 5 are immersed in the molten glass Gm. The number or positions of arrangement of the electrodes 5 can be appropriately changed depending on, for example, the size of the glass-melting furnace 1. Further, sheet-shaped electrodes may be used in place of the rod-shaped electrodes 5, and the electrodes 5 may be arranged on the side walls 1c in place of the bottom wall 1d. In this embodiment, the molten glass Gm and/or the glass raw materials Gr is/are heated by using both of the heating devices 4 and the electrodes 5. However, it is not always required that the electrodes 5 be provided. In view of improvement of energy efficiency, however, it is preferred that the electrodes 5 be also used so as to curtail outputs of the heating devices 4.

As illustrated in FIG. 2, the heating devices 4 each comprise: a burner 6 configured to form the flame F; a hydrogen gas supply device 7 configured to supply a hydrogen gas "a" to the burner 6; a hydrocarbon gas supply device 8 configured to supply a hydrocarbon gas "b" to the burner 6; and a combustion-supporting gas supply device 9 configured to supply a combustion-supporting gas "c" to the burner 6. A distal end of the burner 6 is in abutment against a burner tile 10 mounted into a through hole 1ca of the side wall 1c of the glass-melting furnace 1. The burner tile 10 may be formed of the same material as that of the side walls 1c, but is made of a refractory material such as a fired brick in this embodiment.

The burner 6 comprises: a fuel gas nozzle 11 having a fuel gas flow passage 11a that allows a fuel gas "d" containing at least one of the hydrogen gas "a" or the hydrocarbon gas "b" to flow; and a combustion-supporting gas nozzle 12 having a combustion-supporting gas flow passage 12a that allows the combustion-supporting gas "c" to flow. In this embodiment, the combustion-supporting gas nozzle 12 is arranged so as to surround an outside of the fuel gas nozzle 11. That is, the burner 6 has a double-pipe structure in which the fuel gas nozzle 11 is arranged on an inner side and the combustion-supporting gas nozzle 12 is arranged on an outer side.

The hydrogen gas supply device 7 comprises: a hydrogen gas source 13 in which the hydrogen gas "a" serving as the fuel gas "d" is stored; and a hydrogen gas pipe 14 that allows the hydrogen gas "a" to be supplied from the hydrogen gas source 13 to the fuel gas nozzle 11 of the burner 6.

A flow rate adjustment valve 15, a switching valve 16, and a check valve 17 are provided to the hydrogen gas pipe 14. The flow rate adjustment valve 15 is configured to adjust a flow rate of the hydrogen gas "a". The switching valve 16 is configured to switch opening and closing of a flow passage for the hydrogen gas "a" flowing at the adjusted flow rate. The check valve 17 is configured to prevent backflow of the fuel gas "d".

The hydrocarbon gas supply device 8 comprises: a hydrocarbon gas source 18 in which the hydrocarbon gas "b" serving as the fuel gas "d" is stored; and a hydrocarbon gas pipe 19 that allows the hydrocarbon gas "b" to be supplied from the hydrocarbon gas source 18 to the fuel gas nozzle 11 of the burner 6. As the hydrocarbon gas "b", for example, a butane gas, a propane gas, a petroleum gas, or a natural gas can be used. However, in view of further reduction of CO₂ contained in an exhaust gas, it is preferred that a natural gas be used as the hydrocarbon gas "b".

A flow rate adjustment valve 20, a switching valve 21, and a check valve 22 are provided to the hydrocarbon gas pipe 19. The flow rate adjustment valve 20 is configured to adjust a flow rate of the hydrocarbon gas "b". The switching valve 21 is configured to switch opening and closing of a flow passage for the hydrocarbon gas "b" flowing at the adjusted flow rate. The check valve 22 is configured to prevent backflow of the fuel gas "d".

In this embodiment, an upstream end of the hydrogen gas pipe 14 is connected to the hydrogen gas source 13, and an upstream end of the hydrocarbon gas pipe 19 is connected to the hydrocarbon gas source 18. Meanwhile, a downstream end of the hydrogen gas pipe 14 and a downstream end of the hydrocarbon gas pipe 19 are connected to an upstream end of a fuel gas pipe 23 while being in a state of being coupled to each other. A downstream end of the fuel gas pipe 23 is connected to the fuel gas nozzle 11 of the burner 6. The fuel gas "d" containing the hydrogen gas "a" and the hydrocarbon gas "b" at a mixing ratio that has been adjusted by the flow rate adjustment valves 15 and 20 and/or the switching valves 16 and 21 flows through the fuel gas pipe 23. That is, the fuel gas "d" may consist only of the hydrogen gas "a", consist only of the hydrocarbon gas "b", or consist of a mixed gas of the hydrogen gas "a" and the hydrocarbon gas "b". A switching valve 24 configured to switch opening and closing of a flow passage for the fuel gas "d" is provided to the fuel gas pipe 23.

The combustion-supporting gas supply device 9 comprises: a combustion-supporting gas source 25 in which the combustion-supporting gas "c" is stored; and a combustion-supporting gas pipe 26 configured to supply the combustion-supporting gas "c" from the combustion-supporting gas source 25 to the combustion-supporting gas nozzle 12 of the burner 6. In this embodiment, an upstream end of the combustion-supporting gas pipe 26 is connected to the combustion-supporting gas source 25, and a downstream end of the combustion-supporting gas pipe 26 is connected to the combustion-supporting gas nozzle 12 of the burner 6. As the combustion-supporting gas "c", for example, oxygen or air can be used. When oxygen is used as the combustion-supporting gas "c", an oxygen concentration can be set to 50% by mass or more, preferably 70% by mass or more, more preferably 90% by mass or more. As the oxygen concentration increases, the introduction of gases that do not contribute to combustion into the melting furnace 1 can be reduced to thereby improve thermal efficiency.

A flow rate adjustment valve 27 and a switching valve 28 are provided to the combustion-supporting gas pipe 26. The flow rate adjustment valve 27 is configured to adjust a flow rate of the combustion-supporting gas "c". The switching valve 28 is configured to switch opening and closing of a flow passage for the combustion-supporting gas "c" flowing at the adjusted flow rate.

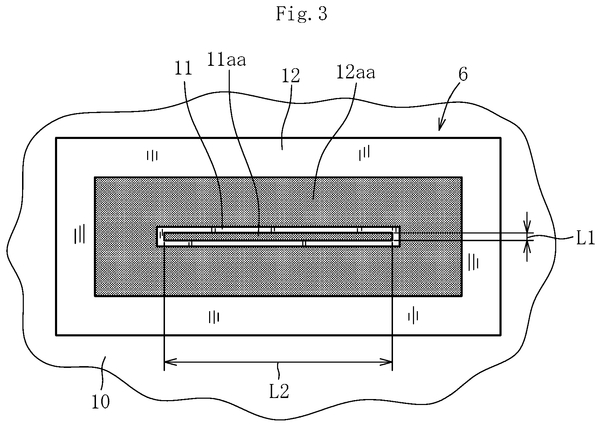

As illustrated in FIG. 3, the fuel gas nozzle 11 of the burner 6 has a fuel gas injection port 11aa at an opening portion of the fuel gas flow passage 11a on an inner side of the furnace. The fuel gas injection port 11aa allows injection of the fuel gas "d" into the furnace. The combustion-supporting gas nozzle 12 of the burner 6 has a combustion-supporting gas injection port 12aa at an opening portion of the combustion-supporting gas flow passage 12a on the inner side of the furnace. The combustion-supporting gas injection port 12aa allows injection of the combustion-supporting gas "c" into the furnace.

The fuel gas injection port 11aa has a flat shape that is elongated in the direction of flow of the molten glass Gm. A dimensional ratio L2/L1 between a height dimension L1 of the fuel gas injection port 11aa and a width dimension (dimension in the direction of flow of the molten glass Gm) L2 of the fuel gas injection port 11aa is preferably from 10 to 60, more preferably from 15 to 50, further preferably from 20 to 40. The combustion-supporting gas injection port 12aa is formed so as to surround the fuel gas injection port 11aa having a flat shape.

A sectional area ratio S2/S1 between a sectional area S1 of the fuel gas injection port 11aa (for example, an area of a rectangular region) and a sectional area S2 of the combustion-supporting gas injection port 12aa (for example, an area of a rectangular ring region) is preferably from 4 to 12, more preferably from 5 to 11, further preferably from 6 to 10.

Next, the manufacturing method for a glass article using the manufacturing apparatus having the above-mentioned configuration is described.

This manufacturing method comprises the melting step as described above. The manufacturing method further comprises, as required, a fining step of performing a fining treatment on the molten glass obtained in the melting step, a homogenization step of stirring the molten glass that has undergone the melting step, and a forming step of forming the molten glass that has undergone the homogenization step into glass articles.

As illustrated in FIG. 1 and FIG. 2, in the melting step, the glass raw materials Gr are heated and molten in the glass-melting furnace 1 by using the heating devices 4 each including the burner 6 configured to burn the fuel to form the flame F. In this embodiment, in view of the improvement of energy efficiency, or the like, heating through the application of a current with the electrodes 5 is also performed in the melting step. However, it is not always required that the heating through the application of a current with the electrodes 5 be performed.

In the melting step, when a flow velocity of the fuel gas "d" at the fuel gas injection port 11aa is represented by V1 [m/s], a flow velocity of the combustion-supporting gas "c" at the combustion-supporting gas injection port 12aa is represented by V2 [m/s], and a proportion of a generated heat amount [W] from the hydrocarbon gas "b" to a total generated heat amount [W] from the fuel gas "d" is represented by "p" ("p" is from 0 to 1), a flow velocity ratio V1/V2 satisfies a relationship expressed by the following Expression (A). $8 - 6 p \leq V 1 / V 2 \leq 24 - 18 p$

In this manner, regardless of the mixing ratio between the hydrogen gas "a" and the hydrocarbon gas "b" in the fuel gas "d", a reaction between the fuel gas "d" and the combustion-supporting gas "c" can be caused efficiently over a wide area to combust the fuel gas "d" over a wide area. As a result, the flames F extending over a wide area inside the furnace can be formed with the burners 6 while CO₂ contained in the exhaust gas generated in the melting step is being reduced. Thus, the glass raw materials Gr and the like can be efficiently heated and molten with the flames F. In this case, a length L3 of the flame F extends in a direction from one of the side walls 1c of the glass-melting furnace 1 toward another one of the side walls 1c. In view of prevention of damage to the burner tile 10 and the side walls 1c, which is caused by the combustion of the fuel gas "d" inside the burner tile 10, the length L3 of the flame F is preferably 500 mm or more, more preferably 1,000 mm or more, further preferably 1,500 mm or more.

The flow velocity V2 of the combustion-supporting gas "c" at the combustion-supporting gas injection port 12aa is preferably from 3 m/s to 20 m/s, more preferably from 4 m/s to 18 m/s, further preferably from 5 m/s to 15 m/s. It is preferred that the flow velocity V1 of the fuel gas "d" at the fuel gas injection port 11aa be larger than the flow velocity V2 of the combustion-supporting gas "c" at the combustion-supporting gas injection port 12aa.

Here, the flow velocity V1 [m/s] of the fuel gas "d" at the fuel gas injection port 11aa is determined based on a flow rate Q1 [m³/s] of the fuel gas "d" and the sectional area S1 [m²] of the fuel gas injection port 11aa (V1=Q1/S1). Similarly, the flow velocity V2 of the combustion-supporting gas "c" at the combustion-supporting gas injection port 12aa is determined based on a flow rate Q2 of the combustion-supporting gas "c" and the sectional area S2 of the combustion-supporting gas injection port 12aa (V2=Q2/S2). Thus, the flow velocity ratio V1/V2 can be expressed by the following Expression (B). $V 1 / V 2 = \left(Q1/Q2\right) \times \left(S2/S1\right)$

In this embodiment, the sectional area ratio S2/S1 is set to fall within a range of from 4 to 12. Thus, the flow velocities V1 and V2 of the fuel gas "d" and the combustion-supporting gas "c" can be adjusted so as to satisfy the above-mentioned relationship expressed by Expression (A) even without excessively changing the flow rate ratio Q1/Q2. More specifically, when the sectional area ratio S2/S1 is set to fall within the range of from 4 to 12, the flow velocity ratio V1/V2 satisfies the relationship expressed by Expression (A) by changing the flow rate ratio Q1/Q2 within a range of, for example, from 0.5 to 2. Thus, when the sectional area ratio S2/S1 is set to fall within the range of from 4 to 12, the flow velocity ratio V1/V2 is easily adjustable so as to satisfy the above-mentioned relationship expressed by Expression (A).

Further, the fuel gas injection port 11aa has a flat shape, and hence the fuel gas "d" can be injected over an area with a large width while the flow velocity V1 of the fuel gas "d" is being maintained. In addition, the fuel gas injection port 11aa is surrounded by the combustion-supporting gas injection port 12aa. Thus, the combustion-supporting gas "c" injected from the combustion-supporting gas injection port 12aa is present around the fuel gas "d" injected from the fuel gas injection port 11aa. As a result, the fuel gas "d" reacts with the combustion-supporting gas "c" over a wide area inside the furnace to cause combustion. Thus, the flame F extending over a wide area inside the furnace can easily be formed. In this case, the flame F has a large length L3 and a large width (dimension in the direction of flow of the molten glass Gm). The width of the flame F is preferably from 100 mm to 600 mm, more preferably from 200 mm to 500 mm. A preferred range of the length L3 of the flame F is as described above.

In the melting step, it is preferred that a ratio of use between the hydrogen gas "a" and the hydrocarbon gas "b" be adjusted. In this embodiment, the ratio of use between the hydrogen gas "a" and the hydrocarbon gas "b" is adjusted by changing the mixing ratio between the hydrogen gas "a" and the hydrocarbon gas "b", which are to be supplied to the burners 6. Thus, production efficiency for glass articles can be desirably maintained while CO₂ in the exhaust gas generated in the melting step is being reduced.

The mixing ratio between the hydrogen gas "a" and the hydrocarbon gas "b" may be the same for or different among the burners 6. When the mixing ratio between the hydrogen gas "a" and the hydrocarbon gas "b" is different, the flow velocity ratio V1/V2 may be different among the burners 6.

In this embodiment, the melting step comprises a step of adjusting the water amount in the molten glass Gm by adjusting the ratio of use between the hydrogen gas "a" and the hydrocarbon gas "b". Specifically, when the water amount in the molten glass Gm is lower than a reference value, the mixing ratio of the hydrogen gas "a" is increased. When the water amount in the molten glass Gm is higher than the reference value, the mixing ratio of the hydrocarbon gas "b" is increased. In this manner, the water amount in the molten glass Gm is adjusted so as to fall within a predetermined range.

The water amount in the molten glass Gm can be evaluated based on, for example, β-OH of the glass articles manufactured from the molten glass Gm. Thus, it is preferred that this manufacturing method comprise a step of measuring the water amount in the glass articles. In this case, in the melting step, for example, the ratio of use between the hydrogen gas "a" and the hydrocarbon gas "b" is adjusted based on a result of measurement of the water amount in the glass articles to thereby adjust the water amount in the molten glass Gm. The water amount in the molten glass Gm affects thermal dimensional stability of the glass articles.

Here, as illustrated in FIG. 1, in the melting step, a batch layer Ga and a foam layer Gb may cover a surface of the molten glass Gm. The batch layer Ga corresponds to the glass raw materials Gr supplied into the glass-melting furnace 1. The foam layer Gb is formed along with heating and melting of the glass raw materials Gr. The foam layer Gb is formed along with, for example, the generation of gas, such as a carbonic acid gas (CO or CO₂), an O₂ gas, or an SO₂ gas, from the glass raw materials Gr. In FIG. 1, the surface of the molten glass Gm is covered with the batch layer Ga and the foam layer Gb. However, the batch layer Ga may be situated on the foam layer Gb that covers the surface of the molten glass Gm. It is preferred that the batch layer Ga and the foam layer Gb cover 80% to 100%, more preferably 90% to 100%, further preferably 95% to 100% of the surface of the molten glass Gm. In this manner, the surface of the molten glass Gm is adequately covered with the batch layer Ga and the foam layer Gb, which also function as heat insulating layers. Thus, heat dissipation from the surface of the molten glass Gm can be reduced to thereby improve the energy efficiency.

Further, it is preferred that the batch layer Ga cover 20% to 70% of the surface of the molten glass Gm, more preferably 50% to 70% of the surface of the molten glass Gm. In this manner, the batch layer Ga, which also functions as the heat insulating layer, can reduce the heat dissipation from the surface of the molten glass Gm to thereby improve the energy efficiency. Further, even when a condition inside the glass-melting furnace 1 has changed due to, for example, a change in flow rate and hence the glass raw materials Gr are more liable to stagnate, the glass raw materials Gr can be continuously fed by causing the batch layer Ga to flow over a region that has not been covered with the batch layer Ga. Thus, the molten glass Gm can be continuously generated in a stable manner.

The embodiment of the present invention has been described. However, the embodiment of the present invention is not limited to that described above, and various changes are possible without departing from the gist of the present invention.

In the embodiment described above, description has been given of the case in which the fuel gas injection port 11aa has a flat shape. However, a shape of the fuel gas injection port 11aa is not particularly limited. For example, the fuel gas injection port 11aa may have a non-flat shape such as a circular or square shape.

In the embodiment described above, description has been given of the case in which the combustion-supporting gas injection port 12aa surrounds the fuel gas injection port 11aa. However, a positional relationship between the fuel gas injection port 11aa and the combustion-supporting gas injection port 12aa is not particularly limited as long as the fuel gas "d" and the combustion-supporting gas "c" are mixed together. For example, the combustion-supporting gas injection port 12aa may be arranged only above the fuel gas injection port 11aa, the combustion-supporting gas injection port 12aa may be arranged only below the fuel gas injection port 11aa, or the combustion-supporting gas injection port 12aa may be arranged only above and below the fuel gas injection port 11aa.

In the embodiment described above, description has been given of the case in which the hydrogen gas supply device 7 and the hydrocarbon gas supply device 8 comprise the fuel gas pipe 23 as a common pipe. However, configurations thereof are not limited to those described above. For example, in the hydrogen gas supply device 7 and the hydrocarbon gas supply device 8, the fuel gas pipe 23 may be omitted so that the hydrogen gas pipe 14 and the hydrocarbon gas pipe 19 are directly connected to the fuel gas nozzle 11 of the burner 6.

In the embodiment described above, description has been given of the case in which the ratio of use between the hydrogen gas "a" and the hydrocarbon gas "b" is adjusted by changing the mixing ratio between the hydrogen gas "a" and the hydrocarbon gas "b", which are to be supplied to the burners 6. However, a method of changing the ratio of use is not limited to the case described above. For example, an output of the burner supplied with only the hydrocarbon gas "b" as the fuel gas "d" and/or an output of the burner supplied with only the hydrogen gas "a" as the fuel gas "d" may be changed. Alternatively, the number of burners supplied with only the hydrocarbon gas "b" as the fuel gas "d" and/or the number of burners supplied with only the hydrogen gas "a" as the fuel gas "d" may be changed.

In this embodiment described above, the melting step comprises a step of adjusting the water amount in the molten glass Gm or the glass articles by adjusting the ratio of use between the hydrogen gas "a" and the hydrocarbon gas "b". However, not only the adjustment of the ratio of use between the hydrogen gas "a" and the hydrocarbon gas "b" but also another method may be used in the step of adjusting the water amount. The adjustment of the ratio of use between the hydrogen gas "a" and the hydrocarbon gas "b" and another method may be used in combination.

A method of supplying gas (for example, an atmospheric air, a dry air, a clean dry air, or oxygen) into the glass-melting furnace 1 may be used as another method. With this method, an atmosphere in the glass-melting furnace 1 is discharged by supplying gas into the glass-melting furnace 1 in the melting step. Thus, a water vapor partial pressure in the glass-melting furnace 1 is decreased. As a result, the water amount in the molten glass Gm or the glass articles is reduced. More specifically, when the amount of supply of gas is increased or the supply of gas is started, the water amount in the molten glass Gm or the glass articles can be reduced. When the amount of supply of gas is decreased or the supply of gas is stopped, the water amount in the molten glass Gm or the glass articles can be increased. The gas may be supplied into the glass-melting furnace 1 along with the discharge of the atmosphere in the glass-melting furnace 1 by using an exhaust device comprising an exhaust gas treatment facility.

Further, a method of increasing and decreasing the amount of gas generated from the glass raw materials Gr may be used as another method. With this method, the amount of gas generated from the glass raw materials Gr is increased and decreased to thereby change the water vapor partial pressure in the glass-melting furnace 1. In this manner, the water amount in the molten glass Gm or the glass articles is adjusted. For example, when the glass raw materials Gr containing carbonates (for example, CaCO₃) are used, carbon dioxide is generated along with heating and melting of the glass raw materials Gr. Along with the generation of carbon dioxide, the water vapor partial pressure in the glass-melting furnace 1 is decreased to thereby decrease the water amount in the molten glass Gm or the glass articles.

In the embodiment described above, the glass article may be, for example, a glass sphere, a glass tube, a glass block, a glass fiber, a sheet glass, a glass roll, or a glass bottle, or may have any other appropriate shape.

### Examples

Now, the manufacturing method for a glass article according to the present invention is described based on Examples. The following Examples are mere exemplifications, and the present invention is not limited to the following Examples by any means.

When (1) the sectional area ratio S2/S1 between the sectional area S1 of the fuel gas injection port 11aa and the sectional area S2 of the combustion-supporting gas injection port 12aa, (2) the proportion "p" of the generated heat amount from the natural gas (hydrocarbon gas) "b" to the total generated heat amount from the fuel gas "d", (3) a proportion "q" of a generated heat amount from the hydrogen gas "a" to the total generated heat amount from the fuel gas "d", and (4) the flow velocity ratio V1/V2 between the flow velocity V1 of the fuel gas "d" at the fuel gas injection port 11aa and the flow velocity V2 of the oxygen gas (combustion-supporting gas) "c" at the combustion-supporting gas injection port 12aa were changed, how a state of the flame F formed with the burner 6 changed was evaluated.

The flow velocity V2 of the oxygen gas "c" at the combustion-supporting gas injection port 12aa was set to 10 m/s for all Examples 1 to 3 and Comparative Examples 1 to 6. The sectional area S1 was set to fall within a range of from 60 m² to 300 m², and the sectional area S2 was set to fall within a range of from 600 m² to 960 m².

The proportion "p" of the generated heat amount from the natural gas "b" to the total generated heat amount from the fuel gas "d" was calculated from a calculated value [W] of a heat amount generated from combustion of a whole amount of the supplied fuel gas "d" and a calculated value [W] of a heat amount generated from combustion of a whole amount of the supplied natural gas "b". The proportion "q" of the generated heat amount from the hydrogen gas "a" to the total generated heat amount from the fuel gas "d" was calculated from the calculated value [W] of the heat amount generated from the combustion of the whole amount of the supplied fuel gas "d" and a calculated value [W] of a heat amount generated from combustion of a whole amount of the supplied hydrogen gas "a". The proportion "q" may be calculated by: 1-p.

The flow velocity V1 [m/s] of the fuel gas "d" at the fuel gas injection port 11aa was calculated from the flow rate Q1 [m³/s] of the supplied fuel gas "d" and the sectional area S1 of the fuel gas injection port 11aa. The flow velocity V2 [m/s] of the oxygen gas "c" at the combustion-supporting gas injection port 12aa was calculated from the flow rate Q2 [m³/s] of the supplied oxygen gas "c" and the sectional area S2 of the combustion-supporting gas injection port 12aa.

The flame F was evaluated as: (1) "×" when the fuel gas "d" and the oxygen gas "c" were not mixed well, causing incomplete combustion with generation of a CO gas; (2) "Δ" when the fuel gas "d" was not successfully injected at a sufficient speed and the fuel gas "d" combusted inside the burner tile 10, resulting in the flame F with a short length; (3) "▲" when a turbulent flow was generated because of a high flow velocity V1 of the fuel gas "d", resulting in the flame F with a short length and a small width; and (4) "○" when the flame F with a large length and a large width was formed.

Results of evaluation of the flame F as described above are shown in Table 1. Comparative Example 1, Comparative Example 4, and Example 1 correspond to a case in which the fuel gas "d" consisted only of the natural gas "b". Comparative Example 2, Comparative Example 5, and Example 2 correspond to a case in which the fuel gas "d" consisted of a mixed gas of the natural gas "b" and the hydrogen gas "a". Comparative Example 3, Comparative Example 6, and Example 3 correspond to a case in which the fuel gas "d" consisted only of the hydrogen gas "a".

**[Table 1]**

| | Sectional area ratio S2/S1 | Proportion "p" of generated heat amount from natural gas | Proportion "q" of generated heat amount from hydrogen gas | Flow velocity ratio V1/V2 | Evaluation of flame |
|---|---|---|---|---|---|
| Comparative Example 1 | 2 | 1 | 0 | 1 | × |
| Comparative Example 2 | 2 | 0.5 | 0.5 | 2.5 | Δ |
| Comparative Example 3 | 2 | 0 | 1 | 4 | Δ |
| Example 1 | 8 | 1 | 0 | 4 | ○ |
| Example 2 | 8 | 0.5 | 0.5 | 10 | ○ |
| Example 3 | 8 | 0 | 1 | 16 | ○ |
| Comparative Example 4 | 16 | 1 | 0 | 8 | ▲ |
| Comparative Example 5 | 16 | 0.5 | 0.5 | 20 | ▲ |
| Comparative Example 6 | 16 | 0 | 1 | 32 | ▲ |

In Comparative Examples 1 to 3, the flow velocity ratio V1/V2 was less than "8-6p", and the flame F was evaluated as "×" or "Δ". Further, in Comparative Examples 4 to 6, the flow velocity ratio V1/V2 was more than "24-18p", and the flame F was evaluated as **"▲".** That is, in Comparative Examples 1 to 6 in which the flow velocity ratio V1/V2 was not "8-6p" or more and "24-18p" or less, desirable results of evaluation for the flame F were not obtained.

Meanwhile, in Examples 1 to 3, the flow velocity ratio V1/V2 was "8-6p" or more and "24-18p" or less, and desirable results were obtained with the evaluation "∘" for the flame F.

### Reference Signs List

1 glass-melting furnace
2 raw-material feeding device
3 transfer pipe
4 heating device
5 electrode
6 burner
7 hydrogen gas supply device
8 hydrocarbon gas supply device
9 combustion-supporting gas supply device
10 burner tile
11 fuel gas nozzle
11a fuel gas flow passage
11aa fuel gas injection port
12 combustion-supporting gas nozzle
12a combustion-supporting gas flow passage
12aa combustion-supporting gas injection port
13 hydrogen gas source
14 hydrogen gas pipe
18 hydrocarbon gas source
19 hydrocarbon gas pipe
23 fuel gas pipe
25 combustion-supporting gas source
26 combustion-supporting gas pipe
a hydrogen gas
b hydrocarbon gas (natural gas)
c combustion-supporting gas (oxygen gas)
d fuel gas
F flame
Ga batch layer
Gb foam layer
Gm molten glass
Gr glass raw material

## Claims

1. A manufacturing method for a glass article, comprising a melting step of heating and melting glass raw materials to generate a molten glass by using a heating device,
wherein the heating device comprises:
a burner configured to form a flame;
a hydrogen gas supply device configured to supply a hydrogen gas to the burner;
a hydrocarbon gas supply device configured to supply a hydrocarbon gas to the burner; and
a combustion-supporting gas supply device configured to supply a combustion-supporting gas to the burner,
wherein the burner comprises:
a fuel gas injection port that allows injection of a fuel gas containing at least one of the hydrogen gas or the hydrocarbon gas; and
a combustion-supporting gas injection port that allows injection of the combustion-supporting gas, and
wherein, when a flow velocity of the fuel gas at the fuel gas injection port is represented by V1 [m/s], a flow velocity of the combustion-supporting gas at the combustion-supporting gas injection port is represented by V2 [m/s], and a proportion of a generated heat amount [W] from the hydrocarbon gas to a total generated heat amount [W] from the fuel gas is represented by "p", a flow velocity ratio V1/V2 satisfies a relationship of: $8 - 6 p \leq V 1 / V 2 \leq 24 - 18 p .$

2. The manufacturing method for a glass article according to claim 1, wherein, when a sectional area of the fuel gas injection port is represented by S1, and a sectional area of the combustion-supporting gas injection port is represented by S2, a sectional area ratio S2/S1 is from 4 to 12.

3. The manufacturing method for a glass article according to claim 1 or 2, wherein the fuel gas injection port has a flat shape.

4. The manufacturing method for a glass article according to claim 1 or 2, wherein the combustion-supporting gas injection port surrounds the fuel gas injection port.

5. The manufacturing method for a glass article according to claim 1 or 2, wherein the combustion-supporting gas is an oxygen gas.

6. The manufacturing method for a glass article according to claim 1 or 2, wherein the hydrocarbon gas is a natural gas.

7. A glass-melting furnace, which is configured to heat and melt glass raw materials to generate a molten glass by using a heating device,
wherein the heating device comprises:
a burner configured to form a flame;
a hydrogen gas supply device configured to supply a hydrogen gas to the burner;
a hydrocarbon gas supply device configured to supply a hydrocarbon gas to the burner; and
a combustion-supporting gas supply device configured to supply a combustion-supporting gas to the burner,
wherein the burner comprises:
a fuel gas injection port that allows injection of a fuel gas containing at least one of the hydrogen gas or the hydrocarbon gas; and
a combustion-supporting gas injection port that allows injection of the combustion-supporting gas, and
wherein, when a sectional area of the fuel gas injection port is represented by S1, and a sectional area of the combustion-supporting gas injection port is represented by S2, a sectional area ratio S2/S1 is from 4 to 12.
